(19) **Europäisches Patentamt European Patent Office Office européen des brevets**

(11) **EP 1 467 578 B1**

(12) **EUROPEAN PATENT SPECIFICATION**

(45) Date of publication and mention of the grant of the patent:
**15.08.2007 Bulletin 2007/33**

(21) Application number: **01995042.7**

(22) Date of filing: **28.12.2001**

(51) Int Cl.:
*H04Q 7/22* *(2006.01)*        *H04L 12/28* *(2006.01)*

(86) International application number:
**PCT/JP2001/011649**

(87) International publication number:
**WO 2003/061311 (24.07.2003 Gazette 2003/30)**

(54) **Node selecting methode**

Knotenauswahlverfahren

Procédé de sélection de noeuds

(84) Designated Contracting States:
**DE FR GB**

(43) Date of publication of application:
**13.10.2004 Bulletin 2004/42**

(73) Proprietor: **Nokia Corporation**
**02150 Espoo (FI)**

(72) Inventor: **KASHIMA, Tsuyoshi**
**Yokohama-shi, Kanagawa 221-0075 (JP)**

(74) Representative: **Slingsby, Philip Roy et al**
**Page White & Farrer**
**Bedford House**
**John Street**
**London, WC1N 2BF (GB)**

(56) References cited:
**JP-A- 9 252 480          JP-A- 11 187 450**
**US-A- 5 946 621          US-A- 5 982 758**

**Description**

Technical Field

The present invention relates to a node selecting method, in particular, to a node selecting method in which a mobile node moving among nodes dispersedly arranged can estimate the distance to a candidate node adjacent to the mobile node when the mobile node selects a node to communicate with next to the node being currently in communication. In addition, by a modification included in the present invention, the present invention can be adapted also to a network in which nodes are unevenly distributed.

Background Art

US Patent US 5 946 621 discloses a method for updating a neighbor set for use by a mobile station during soft handoff.

In recent years, low-cost, low-power, and short-distance wireless devices such as Bluetooth have been widely used in various fields. In many existing systems such as a cellular wireless telephone system, a received signal strength indicator (RSSI) is used for detecting a mobile and for handing over. However, the use of such an RSSI for a wireless device as described above is not always suitable because the use of the RSSI may bring about complication of an electric circuit or an increase in manufacture cost.

By way of example, in a cellular wireless telephone system, a case will be considered wherein a mobile (hereinafter referred to as mobile node) moves among base stations (hereinafter each simply referred to as node) dispersedly arranged. When the mobile node moves, the distance between the mobile node and each node changes. Attendant upon this, the strength of the signal that the mobile node is receiving from each node also changes accordingly.

Generally, such a mobile node measures at predetermined timings the strength of the signal being received from each node. If the strength of the signal being received from the node that the mobile node is currently connected to and in communication with has weakened, the mobile node performs a handing-over operation for changing the connection node into a node the signal from which is strong. An algorithm for the handing-over operation is required together with a technique for distance estimation.

In addition, recent small-size wireless devices such as Bluetooth are expected to be adapted to mobile ad-hoc networks in the future. In such a network, it is naturally thought that nodes may be unevenly distributed unlike a cellular system. Thus, a technique is required that can be adapted also to such an uneven node distribution.

Disclosure of the Invention

The present invention has been made for solving the above-described problems of the background art, and relates to a node selecting method. The present invention provides a distance estimation algorithm that makes it possible to select a node with using no RSSI.

The present invention is defined by independent claims 1 and 2.

A first aspect of the present invention is directed to a node selecting method in which a mobile node moving a plurality of nodes dispersedly arranged estimates a distance to a candidate node adjacent to the mobile node, and selects a node for next communication, characterized in that the mobile node executes a first step of specifying, as the candidate node, a node present within a communication zone of the mobile node; a second step of calculating, for each specified candidate node, a ratio between the number of nodes present within a first region where the communication zone of the mobile node and a communication zone of the candidate node overlap each other, and the number of nodes present within second regions where both the communication zones do not overlap; and a third step of estimating the distance on the basis of the ratio.

The mobile node further executes a fourth step of selecting a node for next communication, on the basis of the estimated distance.

The present invention is characterized by modifying the number N of nodes present within the first region or the second regions, in the second step, as the following independent four methods. Thereby, the present invention can be adapted to even a case wherein nodes are unevenly distributed in each region. As a matter of course, the following methods can be adapted also to a case wherein nodes are evenly distributed.

The present invention is characterized by the following modification:

$$N - \sum_{j=1}^{M} \left( S_j - 3 \right)$$

where N is the total number of nodes being in regions; $S_j$ is the number of nodes included in a complete graph $G_j$ not included in another complete graph than the complete graph $G_j$ itself (hereinafter referred to as maximum complete graph), including four or more nodes; the number of existing maximum complete graphs is M; and j = 1, 2, ..., M.

The present invention is characterized by the following modification:

$$N - \sum_{j=1}^{M}(S_j - 3) + \sum_{\substack{j,k=1\\j\neq k}}^{M} O_{jk}$$

where N is the total number of nodes being in regions; $S_j$ is the number of nodes included in a maximum complete graph $G_j$ including four or more nodes; $O_{jk}$ is a modification item when the number of nodes present within the region where two maximum complete graphs $G_j$ and $G_k$ are overlapping is $Q_{jk}$, $O_{jk} = 0$ when $Q_{jk} = 0$, and $O_{jk} = Q_{jk} - 1$ when $Q_{jk} \neq 0$; j, k = 1, 2, ..., M; and $j \neq k$.

The present invention is characterized by the following modification:

$$N - \sum_{j=1}^{M}(S_j - 3) + \sum_{\substack{j,k=1\\j\neq k}}^{M}(O_{jk} - M_{jk})$$

where N is the total number of nodes being in regions; $S_j$ is the number of nodes included in a maximum complete graph $G_j$ including four or more nodes; $O_{jk}$ is a modification item when the number of nodes present within the region where two maximum complete graphs $G_j$ and $G_k$ are overlapping is $Q_{jk}$, $O_{jk} = 0$ when $Q_{jk} = 0$, and $O_{jk} = Q_{jk} - 1$ when $Q_{jk} \neq 0$; $M_{jk}$ is an amendment item, $M_{jk} = 1$ when $S_j - Q_{jk} = 1$ or $S_k - Q_{jk} = 1$, and $M_{jk} = 0$ when $S_j - Q_{jk} \neq 1$ and $S_k - Q_{jk} \neq 1$; j, k = 1, 2, ..., M; and $j \neq k$.

The present invention is characterized by the following modification. The nodes present within the communication zone of a node are called a neighbor node list (NNL) of the node. NNLs are compared with each other in relation to all nodes present within each region, and even a plurality of nodes are counted as one if the plurality of nodes have the same NNL. The number thus counted is used as the modified number of nodes of the region.

The node selecting method of the present invention is characterized in that the mobile node executes the first to fourth steps at predetermined periods.

The node selecting method of the present invention is characterized in that the predetermined period is changed in accordance with the movement speed of the mobile node.

The node selecting method of the present invention is characterized in that the predetermined period is changed in accordance with the arrangement density of the plurality of nodes.

Brief Description of the Drawings

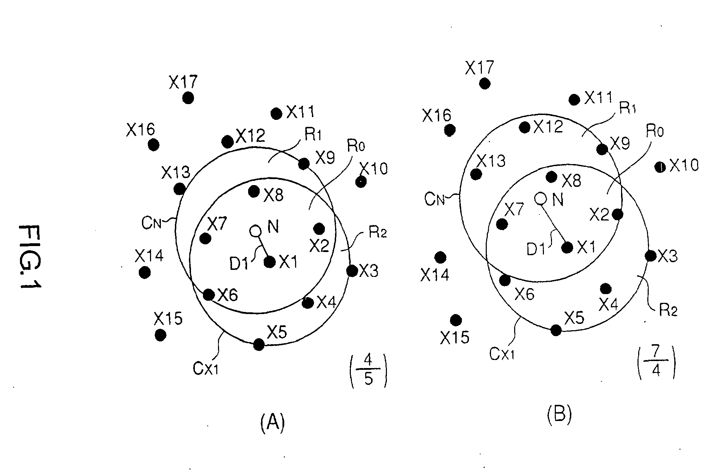

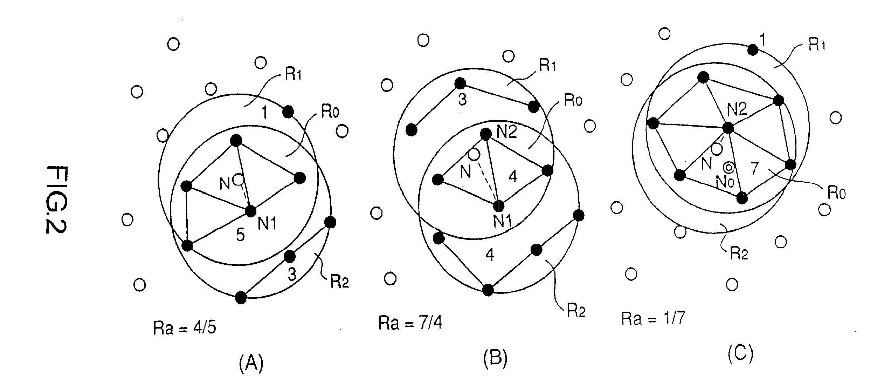

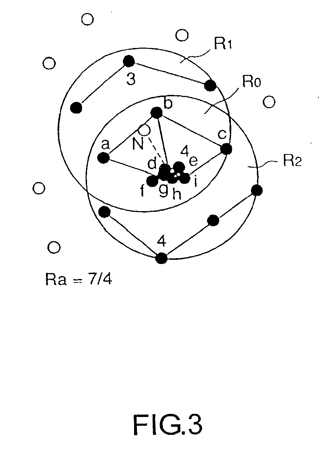

FIG. 1 contains two representations different only in the position of a mobile node (N) for explaining a relation between overlap between the communication zone of the mobile node (N) moving among a plurality of nodes substantially evenly dispersedly arranged, and the communication zone of a node (X1), and the distance (D) between the nodes; FIG. 2 contains representations for explaining what handing over operation is thinkable when the mobile node (N) has moved, using a relation between the number of nodes present within a first region ($R_0$) where communication zones are overlapping and the number of nodes present within second regions ($R_1$, $R_2$) where the communication zones are not overlapping; and FIG. 3 is a representation for explaining an example in which the present invention is adapted to a case wherein nodes are unevenly distributed.

Best Mode for Carrying out the Invention

Using an algorithm of the present invention, a mobile node (N) can estimate the distance to a node present within the communication zone of the mobile node (N), with using no RSSI.

Because the mobile node can estimate the distance to each node by using the algorithm of the present invention, the mobile node can perform a handing-over operation by using the algorithm of the present invention in parallel to an existing algorithm. In addition, it is thinkable that the algorithm of the present invention is used complementarily to an RSSI.

The algorithm of the present invention can be suitably used in a low-cost, low-power, and short-distance network such as Bluetooth. However, the present invention is not limited to that.

That is, the present invention is applicable also to an access point network adopting a cellular or PHS system, or a general mobile ad-hoc network (MANET).

In a network to which the present invention is applied, nodes dispersedly arranged have the same communication zones. The communication zones partially overlap one another and cover a predetermined area. Within the area, a mobile node can communicate with performing a handing-over operation from one node to another.

FIG. 1 shows a state wherein a mobile node (N) is moving among nodes (X1, X2, ..., X16, and X17) substantially evenly dispersedly arranged. For explanation, the nodes other than the node N are not moved.

FIG. 1 shows a state wherein the communication zone $C_N$ of the mobile node N and the communication zone $C_{X1}$ of a node X1 overlap each other. Because the distance D1 between the mobile node N and the node X1 has a mathematically axiomatic relation to the area ratio Ra between the area of the overlapping portion of two communication zones $C_N$ and $C_{X1}$ (first region $R_0$) and the area of the non-overlapping portion of the communication zones $C_N$ and $C_{X1}$ (second regions $R_1$ and $R_2$), the distance D1 can be expressed as follows;

$$\text{Ra} = \text{(the area of the second regions)}/\text{(the area of the first region)}$$

$$\text{D1} = \text{F(Ra)}$$

$$... \quad (1)$$

That is, simply, the larger the area ratio Ra is, the larger the distance D1 is, and vice versa.

Therefore, if the mobile node N estimates to calculate the distance to the specified node X1 present within the communication zone $C_N$ of the mobile node N, the area ratio Ra between the first region $R_0$ and the second regions $R_1$ + $R_2$ may be estimated. However, the area of each region can not be directly estimated.

In case that nodes are substantially evenly dispersedly arranged in a predetermined area, the larger the area of a region is, the larger the number of nodes present within the region is. They are substantially in a proportional relation. Thus, if the ratio between the number of nodes present within the first region $R_0$ and the number of nodes present within the second regions $R_1$ and $R_2$ is calculated, the ratio can be used as an estimation value of the area ratio Ra, and therefore the distance D1 can be estimated by the equation (1).

In the case shown in FIG. 1, in FIG. 1(A), five nodes X1, X2, X6, X7, and X8 other than the mobile node N are within the first region $R_0$, and four nodes X9, X3, X4, and X5 are within the second regions $R_1$ and $R_2$. Thus, when the ratio in the number of nodes is calculated, 4/5 is obtained in the case of FIG. 1(A). Likewise, when the ratio in the case of FIG. 1(B) is calculated, 7/4 is obtained. Thus, it is known that the distance D1 in the case of FIG. 1(A) having the smaller ratio is shorter than that in the case of FIG. 1(B). Not only such a relative distance between two nodes is known thus, but also an estimation value of the distance D1 can be obtained using the equation (1). In this case, because not the calculation of the distance D1 is based on only the number of nodes in a region but the ratio Ra in the number of nodes between two regions is used, influence by the density of nodes is eliminated.

In this embodiment, each of nodes including the mobile node N has a communication zone of the same radius and has a function of detecting a node present within the communication zone of that node.

Here, the nodes present within the communication zone of a node are called a neighbor node list (NNL) of the node, and the NNL of each node belonging to the NNL of the mobile node N is called a next NNL (NNNL). The NNL of the mobile node N includes the mobile node N itself.

In a network to which the present invention is applied, the above-described technique is on the assumption that nodes are evenly arranged. However, if a number modified or amended as described below is used in place of the number of nodes, the algorithm of the present invention can be sufficiently adapted to a case wherein nodes are unevenly distributed. A network to which the present invention is applied must meet the following conditions:

(1) Any node in the network has a function of collecting NNLs and NNNLs.
(2) The above collecting function is periodically executed. The period can be properly set in accordance with the node density and the movement speed of the mobile node.
(3) The communication zones of the nodes have substantially the same size.
(4) The nodes are desirably evenly arranged to cover a necessary access area, however, they may be unevenly distributed. In case of an access point (AP) network, the former condition is satisfied.

In case of a network in which nodes are substantially evenly arranged as shown in FIG. 1, the algorithm of the'present invention is most suitably applied.

As described above, the ratio Ra of 4/5 or 7/4 are in proportion to the area ratio between the first region $R_0$ and the second regions $R_1$ and $R_2$. Using the ratio Ra, the distance D1 can be calculated by the equation (1).

But, even if the absolute distance D1 is not calculated, because the equation (1) is a monotonous function, it can be determined which node is nearer to the mobile node N, by knowing only the ratio Ra.

In case that nodes are substantially evenly arranged, node selection according to the present invention is performed in the following procedure:

(1) The mobile node N prepares its NNL and NNNLs.

(2) The mobile node N compares the NNL of the mobile node N with the NNL obtained from a node other than the mobile node N to determine whether the node belongs to the first region or a second region.

(3) The mobile node N counts the numbers of nodes belonging to the first region and to the second regions, calculates the ratio Ra, and then estimates the distance to the mobile node N by the equation (1).

(4) The mobile node N executes the above steps (1) to (3) for every node belonging to the NNL of the mobile node N, estimates the distance in relation to every node, and selects the most appropriate node as the node for next communication (although the node in which the estimated distance is the shortest can be selected, because there are many existing techniques for such an algorithm, for example, information on change in time is used, the algorithm how the estimated distance information is used is not mentioned here.).

(5) The above steps (1) to (4) are repeated at predetermined periods.

FIG. 2 contains representations showing a process for calculating the ratio Ra by the above-described steps 1 to 5, illustrating a relation between the number of nodes present within the first region ($R_0$) where communication zones are overlapping each other, and the number of nodes present within the second regions ($R_1$, $R_2$) where the communication zones are not overlapping. All of (A), (B), and (C) of FIG. 2 show the same arrangement, in which only the mobile node N is moving.

In FIG. 2(A), the mobile node N is connected to a node N1. The ratio Ra calculated in relation to those two nodes is 4/5.

FIG. 2(B) shows a state wherein the mobile node N has slightly moved and the ratio to the node N1 has changed into 7/4. On the other hand, in FIG. 2(C) showing the same state as FIG. 2(B), the ratio to a node N2 is 1/7. In FIG. 2 (C), the position of the mobile node N at the time of FIG. 2(A) is shown by N0 for reference. Therefore, attendant upon the movement of the mobile node N, a handing-over operation is performed from the node N1 that the mobile node N has been till now connected to and in communication with, to the node N2 of the smallest ratio Ra.

In the above-described node selecting method, a case is supposed wherein nodes are evenly distributed. In case that nodes are unevenly distributed as shown in FIG. 3, however, the number of nodes must be modified to count. The number of nodes thus modified to count will be referred to as regional number. The reason why the number of nodes is modified using such a regional number is that the number of nodes counted in the first region in such an uneven distribution is not in proportion to the area of the region.

There are generally two kinds of methods for modifying the number of nodes, which can be adapted to even such a condition that nodes are unevenly distributed. One is a method using complete graphs and the other is a method of comparing NNLs.

In case that nodes are unevenly distributed within a range of distance less than a certain distance (around the communication distance), the unevenly distributed nodes form a complete graph. Conversely speaking, a group of nodes forming one complete graph never occupies more than a certain area, and unevenness undesirable when the area is estimated by the number of nodes can be eliminated by taking the number of complete graphs into consideration. Amendment of the number of nodes in such a case is made by the following equation (2):

$$N - \sum_{j=1}^{M} \left( S_j - 3 \right) \qquad \ldots (2)$$

where N is the total number of nodes being in regions; $S_j$ is the number of nodes included in a complete graph $G_j$ not included in another complete graph than the complete graph $G_j$ itself (hereinafter referred to as maximum complete graph), including four or more nodes; the number of existing maximum complete graphs is M; and j = 1, 2, ..., M.

Although $S_j$ in the equation (2) is a value necessary for decreasing the regional number of a region in which nodes are unevenly distributed, the regional number may be excessively decreased when the above-described complete graphs $G_j$ are overlapping. Thus, an amendment for adding the value corresponding to the excessive decrease must be made. An amendment item for making such an amendment is $O_{jk}$, and an amendment calculation is performed on the basis of the following equation (3):

$$N - \sum_{j=1}^{M}\left(S_j - 3\right) + \sum_{\substack{j,k=1 \\ j \neq k}}^{M} O_{jk} \qquad \ldots (3)$$

where N is the total number of nodes being in regions; $S_j$ is the number of nodes included in a maximum complete graph $G_j$ including four or more nodes; $O_{jk}$ is a modification item when the number of nodes present within the region where two maximum complete graphs $G_j$ and $G_k$ are overlapping is $Q_{jk}$, $O_{jk} = 0$ when $Q_{jk} = 0$, and $O_{jk} = Q_{jk} - 1$ when $Q_{jk} \neq 0$; j, k = 1, 2, ..., M; and $j \neq k$.

As described above, in consideration of overlap of two complete graphs $G_j$ and $G_k$, the number of complete graphs having been excessively decreased by the equation (2) is reamended by $O_{jk}$ shown in the equation (3) to be increased.

Next, the portion of each maximum complete graph where no complete graphs are overlapping is considered. The shape of the region formed by the remaining nodes varies in accordance with whether the number of remaining nodes is not more than one or not less than two. A modification item in consideration of that is $M_{jk}$, and an amendment is made on the basis of the following equation (4):

$$N - \sum_{j=1}^{M}\left(S_j - 3\right) + \sum_{\substack{j,k=1 \\ j \neq k}}^{M}\left(O_{jk} - M_{jk}\right) \qquad \ldots (4)$$

where N is the total number of nodes being in regions; $S_j$ is the number of nodes included in a maximum complete graph $G_j$ including four or more nodes; $O_{jk}$ is a modification item when the number of nodes present within the region where two maximum complete graphs $G_j$ and $G_k$ are overlapping is $Q_{jk}$, $O_{jk} = 0$ when $Q_{jk} = 0$, and $O_{jk} = Q_{jk} - 1$ when $Q_{jk} \neq 0$; $M_{jk}$ is an amendment item, $M_{jk} = 1$ when $S_j - Q_{jk} = 1$ or $S_k - Q_{jk} = 1$, and $M_{jk} = 0$ when $S_j - Q_{jk} \neq 1$ and $S_k - Q_{jk} \neq 1$; j, k = 1, 2, ..., M; and $j \neq k$.

Other than the method using complete graphs, a method by comparing NNLs is as follows. NNLs are compared with each other in relation to all nodes present within each region, and even a plurality of nodes are counted as one if the plurality of nodes have the same NNL. The number thus counted is used as the modified number of nodes of the region.

Alternatively, another amendment can be made in place of the above-described amendment.

On the basis of the example shown in FIG. 3, an amending procedure of a regional number will be described in accordance with the equation (4).

FIG. 3 shows a case wherein nodes are added to the state of FIG. 2(B) so that nodes are unevenly distributed. Here, the relation between the same nodes will be pa.id attention to.

So, an amendment of the regional number is made on the basis of the equation (4).

First, there are thinkable two maximum complete graphs, that is, one constituted by nodes a, b, d, e, f, g, h, and i, and the other constituted by nodes b, c, d, e, f, g, h, and i.

In this example, nodes overlapping in the two maximum size complete graphs are seven of the nodes b, d, e, f, g, h, and i.

Therefore, after an amendment based on the equation (4) is made, the modified regional number is 9 - 5- 5 + 6 -1 = 4. Thus, in the case shown in FIG. 3, the ratio Ra must be calculated with the regional number of the first region having been modified into four.

In this case, the ratio Ra is 7/4. That is, in spite of unevenness in the distribution, it is supposed that the distance from the mobile node N is large, like the case of FIG. 2(B).

In case that nodes are unevenly arranged as described above, node selection according to the present invention is performed in the following procedure:

(1) The mobile node N prepares its NNL and NNNLs.
(2) The mobile node N compares the NNL of the mobile node N with the NNL obtained from a node other than the mobile node N being the NNL of the mobile node N to determine whether the node belongs to the first region or a second region.
(3) The mobile node N counts the regional numbers of the first region and the second regions in accordance with the above-described algorithm, calculates the ratio Ra, and then estimates the distance to the mobile node N by the equation (1). Upon counting, the NNNL of the target node obtained in step (1) is used.

(4) The mobile node N executes the above steps (1) to (3) for every NNL belonging to the mobile node N, estimates the distance in relation to every node, and selects the most appropriate node as the node for next communication.
(5) The above steps (1) to (4) are repeated at predetermined periods.

By using the algorithm of the present invention as described above, the distance between two nodes can be estimated with using no RSSI. On the basis of the estimation result, it can be determined whether or not a movement detection or a handing-over operation must be performed. In addition, the algorithm of the present invention can be used in parallel to an existing algorithm for handing over. Further, the present invention can be used even in case that nodes each having an RSSI and nodes each having no RSSI exist together in the same network. As for a node having an RSSI, information on the distance between nodes can be obtained using the RSSI or both of the RSSI and the algorithm of the present invention. As for a node having no RSSI, the distance between nodes can be estimated using the algorithm of the present invention.

In addition, because the whole of the algorithm of the present invention can be realized by software, each node requires no special hardware component as far as the node has a function of collecting and transmitting NNLs.

The distance estimation calculation algorithm of the present invention can be adapted to not only a network in which nodes are evenly arranged, but also a network in which nodes are unevenly distributed. Further, the present invention is applicable to any of a mobile ad-hoc network and an access point network.

Industrial Applicability

The present invention is applicable to an access point network in which nodes are fixedly arranged or a mobile ad-hoc network in which nodes are moving relatively to one another. In addition, by using modified equations, the present invention can be effectively applied to even a case wherein nodes are unevenly distributed in a region.

**Claims**

1. A node selecting method in which a mobile node moving among a plurality of nodes dispersedly arranged estimates a distance to a candidate node adjacent to the mobile node, and selects a node for next communication, **characterized in that** the mobile node executes:

   a first step of specifying, as the candidate node, a node present within a communication zone of the mobile node;
   a second step of calculating, for each specified candidate node, a ratio between the number of nodes present within a first region where the communication zone of the mobile node and a communication zone of the candidate node overlap each other, and the number of nodes present within second regions where both the communication zones do not overlap; and
   a third step of estimating the distance on the basis of the ratio.
   a fourth step of selecting a node for next communication, on the basis of the estimated distance.

2. A node selecting method in which a mobile node moving among a plurality of nodes dispersedly arranged estimates a distance to a candidate node adjacent to the mobile node, and selects a node for next communication, **characterized in that** the mobile node executes:

   a first step of specifying a node present within a communication zone of the mobile node;
   a second step of specifying a designated'node out of the neighbor nodes;
   a third step of specifying a next neighbor node present within a communication zone of the designated node;
   a fourth step of counting a common node number as the number of nodes common to the neighbor node and the next neighbor node;
   a fifth step of counting a non-common node number as the number of nodes not common to the neighbor node and the next neighbor node; and
   a sixth step of estimating a distance between the mobile node and the designated node, on the basis of a ratio between the common node number and the non-common node number.
   a seventh step of selecting a node for next communication, on the basis of the estimated distance.

3. The node selecting method according to claim 1, **characterized in that** the number of nodes is modified by the following equation to be counted when nodes are unevenly distributed in the first region:

$$N - \sum_{j=1}^{M}\left(S_j - 3\right)$$

where N is the total number of nodes being in the first region; $S_j$ is the number of nodes included in a complete graph when the number of complete graphs each including four or more nodes is M; and j = 1, 2, ..., M.

**4.** The node selecting method according to claim 1, **characterized in that** the number of nodes is modified by the following equation to be counted when nodes are unevenly distributed in the first region:

$$N - \sum_{j=1}^{M}\left(S_j - 3\right) + \sum_{\substack{j,k=1 \\ j \neq k}}^{M} O_{jk}$$

where N is the total number of nodes being in the first region; $S_j$ is the number of nodes included in a complete graph when the number of complete graphs each including four or more nodes is M; $Q_{jk}$ is a modification item when the number of nodes present within the region where two complete graphs $G_j$ and $G_k$ are overlapping is $N_{jk}$, $O_{jk} = 0$ when $N_{jk} = 0$, and $O_{jk} = N_{jk} - 1$ when $N_{jk} \neq 0$; and j, k = 1, 2, ..., M.

**5.** The node selecting method according to claim 1, **characterized in that** the number of nodes is modified by the following equation to be counted when nodes are unevenly distributed in the first region:

$$N - \sum_{j=1}^{M}\left(S_j - 3\right) + \sum_{\substack{j,k=1 \\ j \neq k}}^{M}\left(O_{jk} - M_{jk}\right)$$

where N is the total number of nodes being in the first region; $S_j$, $S_k$ is the number of nodes included in a complete graph when the number of complete graphs each including four or more nodes is M; $Q_{jk}$ is a modification item when the number of nodes present within the region where two complete graphs $G_j$ and $G_k$ are overlapping is $N_{jk}$, $O_{jk} = 0$ when $N_{jk} = 0$, and $O_{jk} = N_{jk} - 1$ when $N_{jk} \neq 0$; $M_{jk}$ is an amendment item, $M_{jk} = 1$ when $S_j - N_{jk} = 1$ or $S_k - N_{jk} = 1$, and $M_{jk} = 0$ when $S_j - N_{jk} \neq 1$ and $S_k - N_{jk} \neq 1$; and j, k = 1, 2, ..., M .

**6.** The node selecting method according to claim 1, **characterized in that** neighbor node lists are compared with each other in relation to all nodes present within each region; even a plurality of nodes are counted as one if the plurality of nodes have the same neighbor node list; and the number thus counted is used as the modified number of nodes of the region.

**7.** The node selecting method according to claim 1, **characterized in that** the mobile node executes the first to third steps at predetermined periods.

**8.** The node selecting method according to claim 2, **characterized in that** the mobile node executes the first to sixth steps at predetermined periods.

**9.** The node selecting method according to claim 7 or 8 , **characterized in that** the predetermined period is changed in accordance with a movement speed of the mobile node.

**10.** The node selecting method according to claim 7 or 8, **characterized in that** the predetermined period is changed in accordance with an arrangement density of the plurality of nodes.

**Patentansprüche**

**1.** Knotenauswählverfahren, in welchem ein mobiler Knoten, der sich unter einer Mehrzahl von Knoten bewegt, die verstreut angeordnet sind, eine Entfernung zu einem in Frage kommenden Knoten benachbart zum mobilen Knoten schätzt und einen Knoten für die nächste Kommunikation auswählt, **dadurch gekennzeichnet, dass** der mobile Knoten ausführt:

einen ersten Schritt des Spezifizierens eines Knotens, der innerhalb einer Kommunikationszone des mobilen Knotens vorhanden ist, als den in Frage kommenden Knoten;
einen zweiten Schritt des Berechnens eines Verhältnisses zwischen der Anzahl von Knoten, die innerhalb einer ersten Region vorhanden sind, in welcher die Kommunikationszone des mobilen Knotens und eine Kommunikationszone des in Frage kommenden Knotens einander überlappen, und der Anzahl von Knoten, die innerhalb zweiter Regionen vorhanden sind, in welchen die beiden Kommunikationszonen sich nicht überlappen, für jeden spezifizierten in Frage kommenden Knoten;
einen dritten Schritt des Schätzens der Entfernung auf der Basis des Verhältnisses; und
einen vierten Schritt des Auswählens eines Knotens für die nächste Kommunikation auf der Basis der geschätzten Entfernung.

2. Knotenauswählverfahren, in welchem ein mobiler Knoten, der sich unter einer Mehrzahl von Knoten bewegt, die verstreut angeordnet sind, eine Entfernung zu einem in Frage kommenden Knoten benachbart zum mobilen Knoten schätzt und einen Knoten für die nächste Kommunikation auswählt, **dadurch gekennzeichnet, dass** der mobile Knoten ausführt:

einen ersten Schritt des Spezifizierens eines Knotens, der innerhalb einer Kommunikationszone des mobilen Knotens vorhanden ist;
einen zweiten Schritt des Spezifizierens eines ausersehenen Knotens unter den Nachbarknoten;
einen dritten Schritt des Spezifizierens eines nächsten Nachbarknotens, der innerhalb einer Kommunikationszone des ausersehenen Knotens vorhanden ist;
einen vierten Schritt des Zählens einer gemeinsamen Knotenanzahl als die Anzahl von Knoten, die der Nachbarknoten und der nächste Nachbarknoten gemein haben;
einen fünften Schritt des Zählens einer nicht gemeinsamen Knotenanzahl als die Anzahl von Knoten, die der Nachbarknoten und der nächste Nachbarknoten nicht gemein haben;
einen sechsten Schritt des Schätzens einer Entfernung zwischen dem mobilen Knoten und dem ausersehenen Knoten auf der Basis eines Verhältnisses zwischen der gemeinsamen Knotenanzahl und der nicht gemeinsamen Knotenanzahl; und
einen siebten Schritt des Auswählens eines Knotens für die nächste Kommunikation auf der Basis der geschätzten Entfernung.

3. Knotenauswählverfahren nach Anspruch 1, **dadurch gekennzeichnet, dass** die Anzahl von Knoten durch die folgende Gleichung modifiziert wird, um gezählt zu werden, wenn Knoten in der ersten Region ungleichmäßig verteilt sind:

$$N - \sum_{j=l}^{M}(S_j - 3)$$

wobei N die Gesamtanzahl von Knoten ist, die in der ersten Region sind; $S_j$ die Anzahl von Knoten ist, die in einem kompletten Graphen enthalten sind, wenn die Anzahl von kompletten Graphen, die jeweils vier oder mehr Knoten enthalten, M ist; und j = 1, 2, ..., M.

4. Knotenauswählverfahren nach Anspruch 1, **dadurch gekennzeichnet, dass** die Anzahl von Knoten durch die folgende Gleichung modifiziert wird, um gezählt zu werden, wenn Knoten in der ersten Region ungleichmäßig verteilt sind:

$$N - \sum_{j=l}^{M}(S_j - 3) + \sum_{\substack{j,k=l \\ j \neq k}}^{M} O_{jk}$$

wobei N die Gesamtanzahl von Knoten ist, die in der ersten Region sind; $S_j$ die Anzahl von Knoten ist, die in einem kompletten Graphen enthalten sind, wenn die Anzahl von kompletten Graphen, die jeweils vier oder mehr Knoten enthalten, M ist; $Q_{jk}$ eine Modifikationsgröße ist, wenn die Anzahl von Knoten, die innerhalb der Region vorhanden sind, in welcher zwei komplette Graphen $G_j$ und $G_k$ sich überlappen, $N_{jk}$ ist, $O_{jk} = 0$, wenn $N_{jk} = 0$, und $O_{jk} = N_{jk} -$ 1, wenn $N_{jk} \neq 0$; und j, k = 1, 2, ..., M.

**5.** Knotenauswählverfahren nach Anspruch 1, **dadurch gekennzeichnet, dass** die Anzahl von Knoten durch die folgende Gleichung modifiziert wird, um gezählt zu werden, wenn Knoten in der ersten Region ungleichmäßig verteilt sind:

$$N - \sum_{j=l}^{M}(S_j - 3) + \sum_{\substack{j,k=l \\ j \neq k}}^{M}(O_{jk} - M_{jk})$$

wobei N die Gesamtanzahl von Knoten ist, die in der ersten Region sind; $S_j$, $S_k$ die Anzahl von Knoten ist, die in einem kompletten Graphen enthalten sind, wenn die Anzahl von kompletten Graphen, die jeweils vier oder mehr Knoten enthalten, M ist; $Q_{jk}$ eine Modifikationsgröße ist, wenn die Anzahl von Knoten, die innerhalb der Region vorhanden sind, in welcher zwei komplette Graphen $G_j$ und $G_k$ sich überlappen, $N_{jk}$ ist, $O_{jk} = 0$, wenn $N_{jk} = 0$, und $O_{jk} = N_{jk} - 1$, wenn $N_{jk} \neq 0$; $M_{jk}$ eine Änderungsgröße ist, $M_{jk} = 1$, wenn $S_j - N_{jk} = 1$ oder $S_k - N_{jk} = 1$, und $M_{jk} = 0$, wenn $S_j - N_{jk} \neq 1$ und $S_k - N_{jk} \neq 1$; und j, k = 1, 2, ..., M.

**6.** Knotenauswählverfahren nach Anspruch 1, **dadurch gekennzeichnet, dass** Nachbarknotenlisten in Bezug auf alle Knoten, die innerhalb jeder Region vorhanden sind, miteinander verglichen werden; selbst eine Mehrzahl von Knoten als eins gezählt wird, wenn die Mehrzahl von Knoten dieselbe Nachbarknotenliste aufweist; und die auf diese Weise gezählte Anzahl als die modifizierte Anzahl von Knoten der Region verwendet wird.

**7.** Knotenauswählverfahren nach Anspruch 1, **dadurch gekennzeichnet, dass** der mobile Knoten die ersten bis dritten Schritte in vorbestimmten Perioden ausführt.

**8.** Knotenauswählverfahren nach Anspruch 2, **dadurch gekennzeichnet, dass** der mobile Knoten die ersten bis sechsten Schritte in vorbestimmten Perioden ausführt.

**9.** Knotenauswählverfahren nach Anspruch 7 oder 8, **dadurch gekennzeichnet, dass** die vorbestimmte Periode gemäß einer Bewegungsgeschwindigkeit des mobilen Knotens geändert wird.

**10.** Knotenauswählverfahren nach Anspruch 7 oder 8, **dadurch gekennzeichnet, dass** die vorbestimmte Periode gemäß einer Anordnungsdichte der Mehrzahl von Knoten geändert wird.

**Revendications**

**1.** Procédé de sélection d'un noeud dans lequel un noeud mobile se déplaçant parmi une pluralité de noeuds disposés de façon dispersée estime une distance à un noeud candidat adjacent au noeud mobile, et sélectionne un noeud pour une prochaine communication, **caractérisé en ce que** le noeud mobile exécute :

une première étape de spécification, en tant que noeud candidat, d'un noeud présent dans une zone de communication du noeud mobile ;
une deuxième étape de calcul, pour chaque noeud candidat spécifié, d'un rapport entre le nombre de noeuds présents dans une première région où la zone de communication du noeud mobile et une zone de communication du noeud candidat se chevauchent l'une l'autre, et le nombre de noeuds présents dans des deuxièmes régions où les deux zones de communication ne se chevauchent pas ; et
une troisième étape d'estimation de la distance sur la base du rapport ;
une quatrième étape de sélection d'un noeud pour une prochaine communication, sur la base de la distance estimée.

**2.** Procédé de sélection d'un noeud dans lequel un noeud mobile se déplaçant parmi une pluralité de noeuds disposés de façon dispersée estime une distance à un noeud candidat adjacent au noeud mobile, et sélectionne un noeud pour une prochaine communication, **caractérisé en ce que** le noeud mobile exécute :

une première étape de spécification d'un noeud présent dans une zone de communication du noeud mobile ;
une deuxième étape de spécification d'un noeud désigné hors des noeuds voisins ;
une troisième étape de spécification d'un prochain noeud voisin présent dans une zone de communication du noeud désigné ;
une quatrième étape de compte d'un nombre de noeuds communs comme le nombre de noeuds communs au noeud voisin et au prochain noeud voisin ;
une cinquième étape de compte d'un nombre de noeuds non communs comme le nombre de noeuds non communs au noeud voisin et au prochain noeud voisin ; et
une sixième étape d'estimation d'une distance entre le noeud mobile et le noeud désigné, sur la base d'un rapport entre le nombre de noeuds communs et le nombre de noeuds non communs ;
une septième étape de sélection d'un noeud pour une prochaine communication, sur la base de la distance estimée.

3. Procédé de sélection d'un noeud selon la revendication 1, **caractérisé en ce que** le nombre de noeuds est modifié par l'équation suivante qui doit être calculée lorsque les noeuds sont distribués de manière inégale dans la première région :

$$N - \sum_{j=1}^{M}(S_j - 3)$$

où N est le nombre total de noeuds qui sont dans la première région ; $S_j$ est le nombre de noeuds compris dans un graphique complet lorsque le nombre de graphiques complets comprenant chacun quatre noeuds ou plus est M ; et j = 1, 2,..., M.

4. Procédé de sélection d'un noeud selon la revendication 1, **caractérisé en ce que** le nombre de noeuds est modifié par l'équation suivante qui doit être calculée lorsque les noeuds sont distribués de manière inégale dans la première région :

$$N - \sum_{j=1}^{M}(S_j - 3) + \sum_{\substack{j,k=1 \\ j \neq k}}^{M} O_{jk}$$

où N est le nombre total de noeuds qui sont dans la première région ; $S_j$ est le nombre de noeuds compris dans un graphique complet lorsque le nombre de graphiques complets comprenant chacun quatre noeuds ou plus est M ; $Q_{jk}$ est un article de modification lorsque le nombre de noeuds présents dans la région où deux graphiques complets $G_j$ et $G_k$ se chevauchent est $N_{jk}$, $O_{jk} = 0$ lorsque $N_{jk} = 0$, et $O_{jk} = N_{jk}$ - 1 lorsque $N_{jk} \neq 0$ ; et j, k = 1, 2,..., M.

5. Procédé de sélection d'un noeud selon la revendication 1, **caractérisé en ce que** le nombre de noeuds est modifié par l'équation suivante qui doit être calculée lorsque les noeuds sont distribués de manière inégale dans la première région :

$$N - \sum_{j=1}^{M}(S_j - 3) + \sum_{\substack{j,k=1 \\ j \neq k}}^{M}(O_{jk} - M_{jk})$$

où N est le nombre total de noeuds qui sont dans la première région ; $S_j$, $S_k$ est le nombre de noeuds compris dans un graphique complet lorsque le nombre de graphiques complets comprenant chacun quatre noeuds ou plus est M ; $Q_{jk}$ est un article de modification lorsque le nombre de noeuds présents dans la région où deux graphiques complets $G_j$ et $G_k$ se chevauchent est $N_{jk}$, $O_{jk} = 0$ lorsque $N_{jk} = 0$, et $O_{jk} = N_{jk}$ - 1 lorsque $N_{jk} \neq 0$ ; $M_{jk}$ est un article

de modification, $M_{jk} = 1$ lorsque $S_j - N_{jk} = 1$ ou $S_k - N_{jk} = 1$, et $M_{jk} = 0$ lorsque $S_j - N_{jk} \neq 1$ et $S_k - N_{jk} \neq 1$ ; et $j, k = 1, 2,..., M$.

6. Procédé de sélection d'un noeud selon la revendication 1, **caractérisé en ce que** les listes de noeuds voisins sont comparées les unes aux autres par rapport à tous les noeuds présents dans chaque région ; même une pluralité de noeuds sont comptés comme un si la pluralité de noeuds ont la même liste de noeuds voisins ; et le nombre ainsi compté est utilisé comme le nombre modifié de noeuds de la région.

7. Procédé de sélection d'un noeud selon la revendication 1, **caractérisé en ce que** le noeud mobile exécute la première à la troisième étape à des périodes prédéterminées.

8. Procédé de sélection d'un noeud selon la revendication 2, **caractérisé en ce que** le noeud mobile exécute la première à la sixième étape à des périodes prédéterminées.

9. Procédé de sélection d'un noeud selon la revendication 7 ou 8, **caractérisé en ce que** la période prédéterminée est modifiée en fonction d'une vitesse de mouvement du noeud mobile.

10. Procédé de sélection d'un noeud selon la revendication 7 ou 8, **caractérisé en ce que** la période prédéterminée est modifiée selon en fonction d'une densité de la disposition de la pluralité de noeuds.

FIG.1

EP 1 467 578 B1

FIG.2

Ra = 4/5

(A)

Ra = 7/4

(B)

Ra = 1/7

(C)

FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   US 5946621 A